# EUROPÄISCHE PATENTSCHRIFT

(11) **EP 1 882 179 B1**
(45) Veröffentlichungstag und Bekanntmachung des Hinweises auf die Patenterteilung: **10.07.2013**
(21) Anmeldenummer: 06742248.5
(22) Anmeldetag: 15.04.2006
(51) Int. Cl.: G01N 27/07, G01N 33/28

(54) **GITTERSENSOR**
GRID SENSOR
CAPTEUR A GRILLE

(30) Priorität: 28.04.2005 DE 102005019739
(43) Veröffentlichungstag der Anmeldung: 30.01.2008
(73) Patentinhaber: Helmholtz-Zentrum Dresden - Rossendorf e.V., 01328 Dresden (DE)
(72) Erfinder: PIETRUSKE, Heiko, 01796 Pirne (DE); SÜHNEL, Tobias, 01139 Dresden (DE); PRASSER, Horst-Michael, 01326 Dresden (DE)
(86) Internationale Anmeldenummer: PCT/DE2006/000671
(87) Internationale Veröffentlichungsnummer: WO 2006/114081

(56) Entgegenhaltungen:
- DD-A7- 282 376
- US-A- 4 404 516
- US-A- 4 644 263
- US-A- 5 081 422
- US-A- 5 210 499
- US-B1- 6 314 373
- H.-M. PRASSER A. BÖTTGER, J. ZSCHAU: "A new electrode-mesh tomograph for gas-liquid flows" FLOW MEASUREMENT AND INSTRUMENTATION, Bd. 9, 1998, Seiten 111-119, XP002389213
- WANGJIRANIRAN W ET AL: "A study of non-symmetric air water flow using wire mesh sensor" EXPERIMENTAL THERMAL AND FLUID SCIENCE, ELSEVIER SCIENCE INC, NEW YORK, US, Bd. 29, Nr. 3, März 2005 (2005-03), Seiten 315-322, XP004669517 ISSN: 0894-1777
- PRASSER H-M ET AL: "Evolution of the two-phase flow in a vertical tube-decomposition of gas fraction profiles according to bubble size classes using wire-mesh sensors" INTERNATIONAL JOURNAL OF THERMAL SCIENCES, EDITIONS ELSEVIER, PARIS, FR, Bd. 41, Nr. 1, Januar 2002 (2002-01), Seiten 17-28, XP004332749 ISSN: 1290-0729

## Beschreibung

Die Erfindung betrifft einen Gittersensor mit drahtförmigen Elektroden zur Messung der elektrischen Leitfähigkeit eines Strömungsmediums im Querschnitt einer Rohrleitung. Die Anwendung der Erfindung ist besonders dort gegeben, wo das Strömungsmedium unter hohem Druck und hohen Temperaturen fließt.

Erstmalig wird von Johnson [US 4,644,263] ein Gittersensor beschrieben, der aus elektrisch leitenden Metalldrähten besteht, die im Rohrquerschnitt gegen die Rohrwandung elektrisch isoliert aufgespannt sind. Zwei Ebenen von derartigen Elektrodengittern sind dicht hintereinander in die Rohrleitung derart eingebaut, dass sich die einzelnen Drähte im Winkel von 90 Grad kreuzen, ohne sich zu berühren. Die Drähte werden mit einer elektronischen Schaltung verbunden, die über einen Multiplexer die Elektroden der ersten Ebene nacheinander mit einer Spannungsquelle verbindet und dann über einen zweiten Multiplexer die Elektroden der zweiten Ebene auf ein spannungsempfindlichen Detektor schaltet. Die an den Elektroden der zweiten Ebene auftretenden Spannungen werden mit einem Schwellwert verglichen. Wird dieser überschritten, wird davon ausgegangen, dass am entsprechenden Kreuzungspunkt der Elektroden beider Ebenen momentan leitfähiges Medium, d.h. Flüssigkeit, befindet. Mit Hilfe der Multiplexer werden alle verfügbaren Kreuzungspunkte abgefragt und die Anzahl derjenigen ermittelt, an denen die leitfähige Phase festgestellt wird. Bezogen auf die Gesamtanzahl der Kreuzungspunkte wird ein Maß für den mittleren volumetrischen Anteil der leitfähigen Phase im Strömungsquerschnitt erhalten. Über die Befestigung und die Durchführung der Elektroden durch etwaige Rohrwandungen wird keine Aussage getroffen.

In DD 282 376 A7 wird eine Leitfähigkeitsmesszelle mit zwei Elektrodenebenen beschrieben, bei der eine Ebene durch lamellenartig, in Strömungsrichtung angeordnete Platten besteht, die über die Länge gleichmäßig verteilte, schlitzförmige Öffnungen aufweisen. Dazu ist um 90° gedreht eine Drahtebene angeordnet. Die Strömung wird aufgrund der in Strömungsrichtung eingebrachten Lamellen laminarisiert und somit stark beeinflusst. Eine detaillierte konstruktive Gestaltung und Einsatzgrenzen werden in diesem Patent nicht dargestellt.

Im Patent DE 196 49 011 A1 werden Gittersensoren beschrieben, die aus einer

Leiterplatte bestehen und auf deren Seiten jeweils eine Gitterebene aufgelötet wird. Des Weiteren wird in diesem Patent ein Gittersensor beschrieben, der anstatt Elektrodendrähten Stäbchen mit linsenförmigem Querschnitt besitzt. Diese Form der Elektroden soll eine größere Widerstandsfähigkeit gegen mechanische Beanspruchungen bieten und damit für den industriellen Einsatz geeignet sein, gleichzeitig jedoch eine möglichst geringe Beeinflussung der Strömung bzw. einen möglichst niedrigen Druckverlust gewährleisten. Nachteilig ist jedoch, dass die Beeinflussung der Strömung bei Verwendung der Stäbchen wesentlich höher ist, als bei Sensoren mit drahtförmigen Elektroden. Detailliertere Aussagen zur mechanischen Gestaltung des Sensors werden nicht gemacht.

Nachteil der bekannten Anordnungen von Sensoren mit drahtförmigen Elektroden ist es, dass sie nicht für einen Einsatz bei hohem Druck und hoher Temperatur geeignet sind. Außerdem ist bei den meisten bekannten Anordnungen ein Austausch der Elektroden nur schwierig oder teilweise gar nicht möglich.

Aufgabe der Erfindung ist es, einen Gittersensor vorzuschlagen, welcher auch für den Einsatz Sensors bei hohen und wechselnden Temperaturen und Drücken geeignet ist.

Erfindungsgemäß wird die Aufgabe mit den im Hauptanspruch dargelegten Merkmalen gelöst. Weiterbildungen und spezielle Anordnungen sind den Unteransprüchen entnehmbar.

Durch die druckfeste Gestaltung des Sensorgrundkörpers in Verbindung mit neuen Fertigungstechnologien und der Verwendung von Drähten als Messelektroden, der speziellen Anordnung von Spann-, Isolations- und Halterungselementen wird die Lösung der Aufgabe ermöglicht.

Die Erfindung wird nachfolgend zuerst allgemein und anschließend an zwei Ausführungsbeispielen näher erläutert.

In der zugehörigen Zeichnung zeigen
Fig. 1 eine Elektrode im Messquerschnitt,
Fig. 2 die Abdichtung der Kanäle für die Elektrode,
Fig. 3 die Elektrode innerhalb eines Isolierröhrchens,
Fig. 4 den Gittersensor mit Zugfeder in einer konkreten Halterung,
Fig. 5 ein Detail der Federeinhängung mit Zugfeder,
Fig. 6 die Verwendung einer Druckfeder und
Fig. 7 den Gittersensor mit Druckfeder in seiner Halterung.

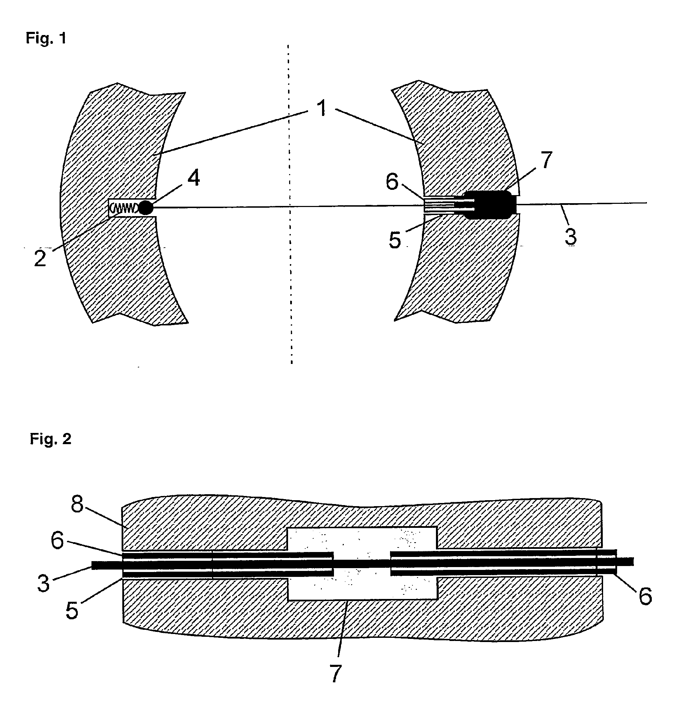

Figur 1 zeigt eine Elektrode im Messquerschnitt der Flüssigkeits-Gas-Strömung. Jede einzelne Elektrode, ausgeführt als Draht (3), wird dabei mittels Feder (2) gespannt. Die Feder (2) wird, wie in Figur 1 erkennbar, innerhalb eines in Spannrichtung des Drahtes verlaufenden Kanals im Sensorkörper (1) innerhalb des druckführenden Bereichs des Sensorkörpers (1) fixiert. Des Weiteren wird jeder einzelne Draht (3) gegenüber seiner Feder (2) durch eine Isolierperle (4) elektrisch isoliert. Die derart befestigten Drähte verlaufen durch den Messquerschnitt und werden durch eigens dafür vorgesehene Kanäle (5) aus dem Sensor bis an die Anschlussstelle der Signalkabel geführt, die den Sensor mit der Datenerfassungseinheit verbinden. Da die Drähte in den Kanälen (5) ebenfalls gegenüber dem Sensorkörper (1) isoliert werden müssen, werden sie in Isolierröhrchen (6) geführt.

Die Abdichtung der Kanäle (5) erfolgt innerhalb von Kavernen (7) mittels temperaturbeständigen Klebstoff wie in Figur 2 dargestellt. Die Isolierröhrchen (6) enden hierzu innerhalb der Kaverne (7), damit ihre Enden vom Klebstoff dicht umschlossen werden können. Über den Abstand der Kavernen (7) von der Innenwand des Sensorkörpers (8) baut sich ein Temperaturunterschied auf, der so zu bemessen ist, dass auch bei einer Temperatur des Messmediums, die über der Maximaltemperatur des Klebstoffs liegt, die Temperatur an der Klebestelle die Maximaltemperatur des Klebstoffs nicht überschreitet. Gegebenfalls ist eine Kühlung des Sensorkörpers in der Umgebung der Kavernen (7) vorzusehen. Die Isolierperle (4) sowie das Isolierröhrchen (6) müssen aus einem Werkstoff gefertigt werden, der bei der Temperatur des Messmediums beständig ist.

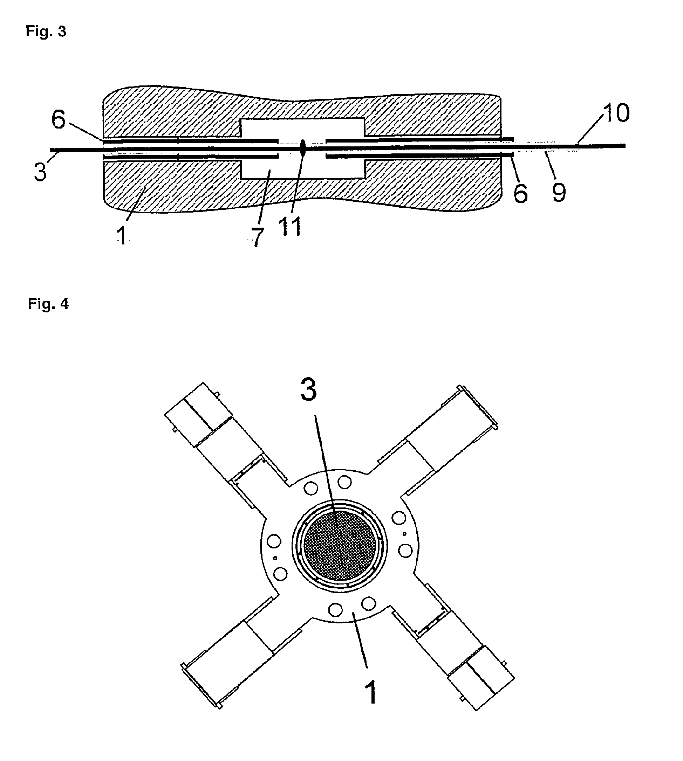

Eine vorteilhafte Ausgestaltung dieser Anordnung der Messdrähte wird in Figur 3 gezeigt und besteht darin, den Elektrodendraht (3) innerhalb des Isolierröhrchens (6) in einer Metallkanüle (9) zu führen, die sich im Kanal (5) befindet. Sie wird durch die Kaverne (7) hindurch bis nach außen geführt, während das Isolierröhrchen wiederum in der Kaverne (7) endet. Am Ende der Metallkanüle (9) wird der Elektrodendraht (3) dicht eingelötet, eingeschweißt oder anderweitig druckdicht (10) mit der Kanüle verbunden. Diese Anordnung hat den Vorteil, dass der Elektrodendraht (3) bei Beschädigung ausgetauscht werden kann. Um eventuelles Verrutschen der Metallkanüle (9) innerhalb der mit Kleber ausgefüllten Kaverne (7) zu verhindern, kann zusätzlich eine Arretiermöglichkeit, z.B. in Form eines Lötpunktes (11), auf die Kanüle (9) gebracht werden.

Vorteilhaft ist es weiterhin, die Feder (2) mit einer lösbaren Verbindung mit dem Sensorkörper (1) zu verbinden, um auch dort eine Austauschbarkeit zu gewährleisten.

Die konstruktive Ausgestaltung der Erfindung wird nachfolgend an zwei Beispielen genauer erläutert.

Beispiel 1, welches in Figur 4 gezeigt wird, ist ein Gittersensor wie er für Leitfähigkeitsmessungen in einer Flüssigkeits-Gas-Strömung zum Einsatz kommt. Der Sensor besitzt 2 zueinander um 90° gedrehte Elektrodenebenen, die aus jeweils 64 Elektroden bestehen. Der Messquerschnitt besitzt einen Durchmesser von ca. 200 mm, der dem Innendurchmesser der angeschlossenen Rohrleitung entspricht. Im Messquerschnitt befinden sich so 3260 Messpunkte. Der Sensorkörper (1) und die Elektrodendrähte (3) bestehen aus Edelstahl, da der Sensor für Messungen in einem Dampf-Wasser-Gemisch bei bis zu 7 MPa und 286 °C eingesetzt wird.

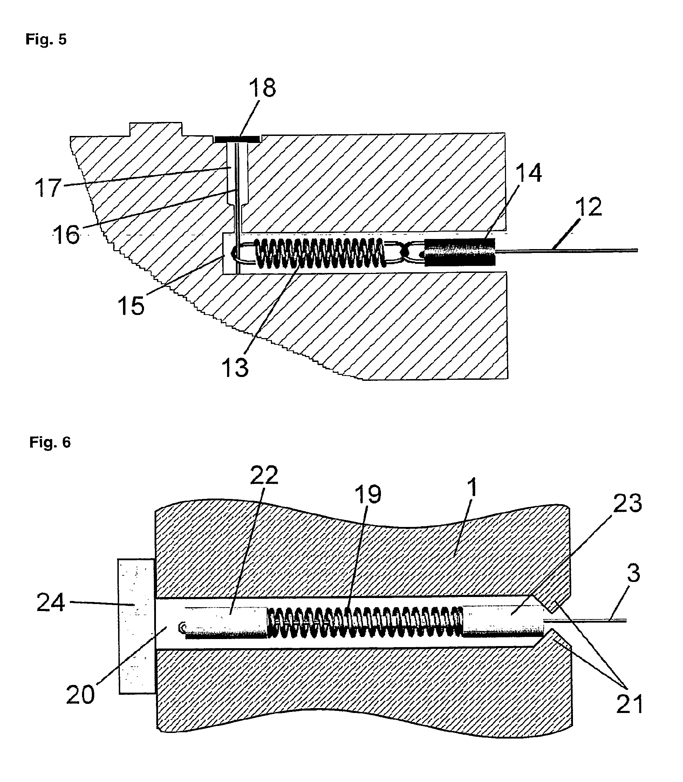

Die in diesem Beispiel verwendete Federeinhängung ist in Figur 5 dargestellt. Die Einhängung, bestehend aus der Zugfeder (13) und der keramische Isolierperle (14), wird in ein Sackloch (15) geführt und im hinteren Bereich durch einen Arretierstift (16) fixiert. Das Sackloch (15) liegt genau in Verlängerungsrichtung des zu spannenden Drahtes (12), die Bohrung für den Stift (17) verläuft lotrecht zu diesem Sackloch (15). Der Stift wird gegen selbstständiges Entfernen im Betrieb mittels Deckel (18) gesichert.

Die verwendete Isolierperle (14) besitzt in axialer Richtung 6 Löcher, durch welche zum einen eine Halterung für die Zugfeder angebracht und zum anderen der Messdraht eingefädelt wird.

Die Dichtheit des Sensorkörpers wird durch die Anordnung der Zugfeder nicht beeinträchtigt, da sich die Einhängung vollständig innerhalb des druckführenden Bereiches des Sensors und der Rohrleitung befindet und kein Kontakt zur Umgebung besteht, der abgedichtet werden müsste.

Auf der der Feder gegenüberliegenden Seite wird der Elektrodendraht in einer Edelstahlkanüle geführt, die von einem Keramikröhrchen zur Isolation umgeben ist, welches in einem Kanal innerhalb des Sensorkörpers liegt. Das Keramikröhrchen endet in einer Kaverne, in der die druckfeste Abdichtung durch Verguss mit einem bis 180 °C beständigen Epoxidharz erfolgt. Die Kanüle und der Elektrodendraht ragen aus dem Sensorkörper heraus und werden am Ende durch Hartlöten dicht verbunden. Dadurch kann kein Messmedium über den Spalt zwischen Kanüle und Elektrodendraht nach außen gelangen. Im Ende der Elektrodendrähte werden diese mit den Signalleitungen zur Verbindung mit der Signalerfassungselektronik verbunden.

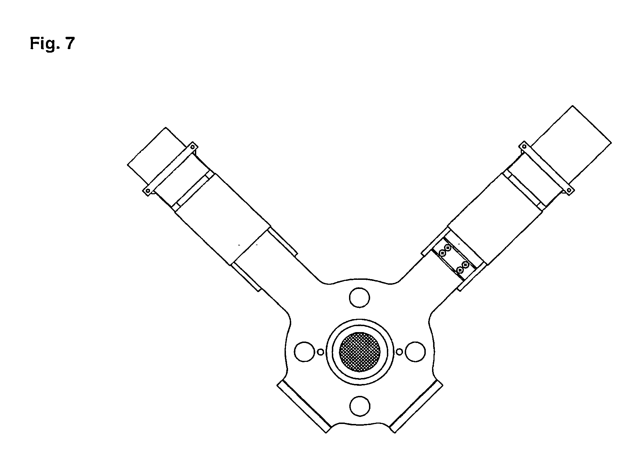

Das zweite Ausführungsbeispiel ist in Figur 7 dargestellt. Der Unterschied zum ersten Ausführungsbeispiel ist die Verwendung einer Druck- statt einer Zugfeder.

In Figur 6 wird gezeigt, wie die Einhängung umgestaltet werden muss, um eine Druckfeder zu verwenden. Die Aufhängung wird von Außen in einen Kanal (20) in den Sensorkörper (1) eingebracht, der Elektrodendraht (3) wird durch die Messebene geführt. Die Einhängung wird durch eine Querschnittsverengung (21) im Kanal (20) zurückgehalten. Jede einzelne Messelektrode (3) wird in eine Isolierkeramik (22) eingehangen und anschließend durch eine Druckfeder (19) gezogen und gespannt. Dabei ist darauf zu achten, dass der Draht (3) die Druckfeder (19) nicht berühren kann. Deshalb ist eine weitere Isolierkeramik (23) eingebracht, die dazu dient, bei Querbewegung der Feder (19) zu verhindern, dass ein elektrischer Kontakt zwischen dem Draht (3) und der Feder zustande kommen kann. Im Gegensatz zur Ausführung der Sensoren mit Zugfedern muss bei diesem Typ der Einhängung die Einhängungsseite abgedichtet werden. Dies geschieht mit einer Dichtplatte (24) an der Außenkontur des Sensors. Der derart konstruierte Drahtgittersensor verfügt über je 16 Elektrodendrähte pro Drahtgitterebene und ist ebenso wie der Sensor des ersten Ausführungsbeispiels für Messungen in Wasser-Dampf-Strömungen bis 70 bar und 286 °C geeignet.

## Patentansprüche

1. Gittersensor zur Messung der Impedanzverteilung eines Fluids in einem Messquerschnitt eines Strömungskanals, bestehend aus zwei Gittern von gegeneinander und gegen die Wandung des Strömungskanals isolierten Elektrodendrähten (3), die in einem Sensorkörper (1) elektrisch isoliert befestigt sind, den Querschnitt eines Strömungskanals überspannen, wobei sich die Drähte des ersten Gitters mit den Drähten des zweiten Gitters in einem vorgegebenen Abstand kreuzen, ohne sich zu berühren, und jeder Draht (3) einzeln von außerhalb des Sensorkörpers elektrisch beschaltet werden kann,
**dadurch gekennzeichnet,**
**dass** jeder der Elektrodendrähte (3) auf einer Seite über eine Isolierperle (4) mechanisch mit einer Feder (2) verbunden ist, die sich in einem Loch im Sensorkörper, dessen Achse in Spannrichtung des Drahtes weist, befindet und dort am Sensorkörper befestigt ist,
**dass** jeder der Elektrodendrähte auf der der Feder (2) gegenüberliegenden Seite mit einem Isolierröhrchen (6) überzogen ist, das sich in einem nach außenführenden Kanal im Sensorkörper befindet,
**dass** das Isolierröhrchen in einer Kaverne (7) innerhalb dieses Kanals endet, die mit einer Dichtmasse ausgefüllt ist und
**dass** sich weder die Isolierperle (4) auf der einen noch das Isolierröhrchen (6) auf der anderen Seite im Messquerschnitt befinden.

2. Gittersensor nach Anspruch 1, **dadurch gekennzeichnet, dass** die Feder als Zugfeder (13) ausgeführt wird, die sich in einem Sackloch (15) befindet, dass sich von innen in Spannrichtung des Drahtes (12) in den Sensorkörper hinein erstreckt und keine Verbindung nach außerhalb des Sensorkörpers hat.

3. Gittersensor nach Anspruch 2, **dadurch gekennzeichnet, dass** die Zugfeder (13) mit einem Stift (16) lösbar befestigt wird, der in eine Bohrung (17) senkrecht zur Spannrichtung des Elektrodendrahtes (12) gesteckt wird, das im Sackloch (15) zur Aufnahme der Zugfeder (13) endet.

4. Gittersensor nach Anspruch 3, **dadurch gekennzeichnet, dass** anstelle eines Stifts (16) eine Schraube zur lösbaren Befestigung der Zugfeder (13) dient.

5. Gittersensor nach Anspruch 3, **dadurch gekennzeichnet, dass** die Stifte (16) zur Fixierung der Zugfedern (13) aller Elektrodendrähte (12) durch einen Andruckring (18) in ihrer Position fixiert werden.

6. Gittersensor nach Anspruch 1, **dadurch gekennzeichnet, dass** die Feder als Druckfeder (19) ausgeführt wird, die sich in einer durchgehenden Bohrung (20) im Sensorkörper befindet und in Spannrichtung des Drahtes auf der durch eine Querschnittsverengung (21) der Bohrung gebildeten Kante aufliegt, dass der Elektrodendraht (3) an der der Auflagekante gegenüberliegenden Seite an der Druckfeder (19) befestigt ist.

7. Gittersensor nach Anspruch 1 bis 6, **dadurch gekennzeichnet, dass** der Elektrodendraht (3) innerhalb des Isolierröhrchens (6) auf der der Feder gegenüberliegenden Seite des Sensorkörpers mit einer Metallkanüle (9) überzogen ist, mit der der Draht (3) außerhalb des Sensorkörpers dicht und fest verbunden ist (10).

## Claims

1. Grid sensor for measuring the impedance distribution of a fluid in a measurement cross section of a flow channel, comprising two grids of electrode wires (3) which are isolated from one another and from the wall of the flow channel, are secured in an electrically insulated manner in a sensor body (1), and span the cross section of a flow channel, with the wires of the first grid crossing the wires of the second grid at a predefined distance without touching, and it being possible for each wire (3) to be individually electrically wired from outside the sensor body, **characterized**
- **in that** each of the electrode wires (3) is mechanically connected to a spring (2) on one side by means of an isolating bead (4), the said spring being located in a hole in the sensor body, the axis of which points in the tensioning direction of the wire, and being secured to the sensor body in that location,
- **in that** each of the electrode wires is covered by an insulating tube (6) on that side which is situated opposite the spring (2), the said insulating tube being located in a channel in the sensor body, which channel leads to the outside,
- **in that** the insulating tube ends in a cavity (7) within this channel, which cavity is filled with a sealing composition, and
- **in that** neither the isolating bead (4) on one side nor the isolating tube (6) on the other side is located in the measurement cross section.

2. Grid sensor according to Claim 1, **characterized in that** the spring is designed as a tension spring (13) which is located in a blind hole (15) which extends from the inside, in the tensioning direction of the wire (12), into the sensor body and is not connected to the area outside the sensor body.

3. Grid sensor according to Claim 2, **characterized in that** the tension spring (13) is releasably secured by a pin (16) which is inserted into a bore (17) perpendicular to the tensioning direction of the electrode wire (12) which ends in the blind hole (15) for accommodating the tension spring (13).

4. Grid sensor according to Claim 3, **characterized in that**, instead of a pin (16), a screw serves to releasably secure the tension spring (13).

5. Grid sensor according to Claim 3, **characterized in that** the pins (16) for fixing the tension springs (13) of all the electrode wires (12) are fixed in position by a contact-pressure ring (18).

6. Grid sensor according to Claim 1, **characterized in that** the spring is designed as a compression spring (19) which is located in a continuous bore (20) in the sensor body and, in the tensioning direction of the wire, rests on the edge which is formed by a constriction (21) in the cross section of the bore, and **in that** the electrode wire (3) is secured to the compression spring (19) on that side which is situated opposite the bearing edge.

7. Grid sensor according to Claims 1 to 6, **characterized in that** the electrode wire (3) is covered by a metal cannula (9) within the isolating tube (6) on that side of the sensor body which is situated opposite the spring, the wire (3) being connected in a sealed and fixed manner to the said metal cannula outside the sensor body (10).

## Revendications

1. Capteur à grille pour mesurer la distribution de l'impédance d'un fluide dans une section transversale de mesure d'un canal d'écoulement, constitué de deux grilles de fils d'électrodes (3) isolés les uns des autres et de la paroi du canal d'écoulement, qui sont fixés de manière électriquement isolée dans un corps de capteur (1), s'étendent par-dessus la section transversale d'un canal d'écoulement, les fils de la première grille croisant les fils de la deuxième grille à une distance prédéfinie, sans venir en contact les uns avec les autres et chaque fil (3) pouvant être branché électriquement individuellement depuis l'extérieur du corps de capteur, **caractérisé en ce que**
- chacun des fils d'électrodes (3) est connecté mécaniquement à un ressort (2) d'un côté par le biais d'une perle isolante (4), lequel ressort se trouve dans un trou dans le corps de capteur, dont l'axe est tourné dans la direction de tensionnement du fil, et qui est fixé dans ce trou au corps de capteur,
- chacun des fils d'électrodes est revêtu du côté opposé au ressort (2) avec une gaine isolante (6) qui se trouve dans un canal conduisant vers l'extérieur dans le corps de capteur,
- la gaine isolante se termine dans une cavité (7) à l'intérieur de ce canal, laquelle est remplie d'une masse d'étanchéité, et
- ni la perle isolante (4) d'un côté, ni la gaine isolante (6) de l'autre côté ne se trouvent dans la section transversale de mesure.

2. Capteur à grille selon la revendication 1, **caractérisé en ce que** le ressort est réalisé sous forme de ressort de traction (13), qui se trouve dans un trou borgne (15) s'étendant depuis l'intérieur dans la direction de tensionnement du fil (12) dans le corps de capteur et ne présente aucune connexion vers l'extérieur du corps de capteur.

3. Capteur à grille selon la revendication 2, **caractérisé en ce que** le ressort de traction (13) est fixé de manière desserrable avec une goupille (16) qui est enfichée dans un alésage (17) perpendiculairement à la direction de tensionnement du fil d'électrode (12) qui se termine dans le trou borgne (15) pour recevoir le ressort de traction (13).

4. Capteur à grille selon la revendication 3, **caractérisé en ce qu'**au lieu d'une goupille (16), on utilise une vis pour la fixation desserrable du ressort de traction (13).

5. Capteur à grille selon la revendication 3, **caractérisé en ce que** les goupilles (16) pour la fixation des ressorts de traction (13) de tous les fils d'électrodes (12) sont fixées dans leur position par une bague de pression (18).

6. Capteur à grille selon la revendication 1, **caractérisé en ce que** le ressort est réalisé sous forme de ressort de compression (19) qui se trouve dans un alésage traversant (20) dans le corps de capteur, et qui repose, dans la direction de tensionnement du fil, sur l'arête formée par un rétrécissement de section transversale (21) de l'alésage, et **en ce que** le fil d'électrode (3) est fixé au ressort de compression (19) du côté opposé à l'arête d'appui.

7. Capteur à grille selon les revendications 1 à 6, **caractérisé en ce que** le fil d'électrode (3) est recouvert d'une canule métallique (9) à l'intérieur de la gaine isolante (6) du côté du corps de capteur opposé au ressort, avec laquelle canule métallique le fil (3) est connecté de manière hermétique et solide (10) à l'extérieur du corps de capteur.
